# EUROPEAN PATENT SPECIFICATION

(11) **EP 0 501 858 B1**
(45) Date of publication and mention of the grant of the patent: **13.11.1996**
(21) Application number: 92400458.3
(22) Date of filing: 21.02.1992
(51) Int. Cl.: H02H 5/10, E05F 15/00

(54) **Fail safe obstruction detector for door openers**
Betriebssicherer Behinderungsdetektor für Türöffner
Détecteur d'obstacle à sécurité intégrée pour ouvrir des portes

(30) Priority: 25.02.1991 US 660042
(43) Date of publication of application: 02.09.1992
(73) Proprietor: GMI HOLDINGS INC, Alliance, Ohio 44601 (US)
(72) Inventor: Waggamon, Dennis W., North Canton, Ohio 44720 (US)
(74) Representative: Dubois-Chabert, Guy

(56) References cited:
- DE-U- 9 006 605
- US-A- 3 742 222

## Description

### BACKGROUND OF THE INVENTION

### Field of the Invention

This invention relates to automatic door operators and, more particularly, to door operators having obstruction detectors.

### Description of the Prior Art

There have been various types of obstruction detectors for use in garage door operators. The oldest system consisted of a torque sensor in the motor of the door operator itself. If the sensor detected excess torque, such as caused by the door attempting to close upon something that was in its path, the door stopped and reversed.

There has recently been increased attention paid to garage door operator safety. Legislation has been passed in several states, including Minnesota and California, and there is pending federal legislation. The purpose of this legislation is to provide additional safety features to residential garage door operators beyond the traditional torque sensors. The California law requires the inclusion of a tactile garage door edge sensor, an optical sensor or similar device that, when activated, is designed to cause a closing door to open and prevent an open door from closing.

Edge sensors and optical or light beam sensors are two of the more popular obstruction detectors currently being used. Edge sensors are commonly used in elevator doors and also designed specifically for use on the bottom edge of garage doors. An edge sensor device typically comprises a strip placed along the leading edge of the door providing a multiplicity of parallel open switches spaced along the door edge. When pressure is applied to any spot on the strip, one or more of the switches closes producing a closed-circuit. Edge sensors thus provide an open-circuit when no obstruction is sensed and provide a closed-circuit when an obstruction contacts the sensor.

Light beam sensors have become recently popular. These systems typically include an infrared light emitter positioned on one side of the garage doorway and an infrared sensor on the other side. The emitter produces a light beam that is aligned so that it extends across the doorway and strikes the sensor on the other side. As long as the sensor detects the light beam, the sensor outputs a low-level signal. When the light beam is broken and sensor does not detect the presence of the light beam, the sensor outputs a high-level signal indicating the presence of an obstruction in the doorway.

These obstruction detectors are connected to the door operator by three lines, a supply line, a signal line and a ground line. The supply line typically supplies 20 to 30 volts from the power supply of the door operator to the remote obstruction detector. The signal line provides a signal from the obstruction detector to the door operator. The ground line supplies a reference signal from the door operator to the remote detection device. The voltage on the signal line is close to the supply voltage when the obstruction sensing device senses an obstruction and is close to ground when no obstruction is sensed.

As long as the door operator receives a low-level output signal from the obstruction detector on the signal line, the operator operates normally, opening and closing the door. When a high-level output signal is received from the obstruction detector, the signal is an indication that an obstruction has been detected, and the door operator stops the door if it is closing and reverses it. (If the door is already going up when an obstruction is detected, the operator continues opening the door.) As long as an obstruction continues to be sensed, the operator will not permit the door to close.

These existing obstruction detectors are generally very effective in sensing an obstruction and the door operator takes the appropriate action in response. However, the obstruction detectors are only effective as long as they work and as long as the wiring from the door operator to the detector is operating properly.

While the wiring within the door operator/control circuit is usually well protected (and correctly wired), obstruction detection usually requires that the obstruction detector be located near the floor or the bottom of the door, remote from the detector. This exposes the detector wiring to physical hazards and potential wiring errors. If one of the wires from the obstruction detector to the door operator breaks or is damaged or if the wires short out, the signal from the obstruction detector will be unreliable. If certain wires short or open, the system will produce a high-level signal which will cause the door operator to keep the door open. However, if certain other conditions occur, it is possible for the door operator to continue to receive a low-level signal from the obstruction detector even though there is an obstruction in the doorway.

For example, if the supply line and the signal line short together, a high-level signal will be present on the signal line regardless of the presence of an obstruction. If the signal line and the ground line short together, a low-level signal will always be present on the signal line regardless of the presence of an obstruction. If the supply line or the signal line is damaged creating an open-circuit on either line, a low-level signal will always be present on the signal line regardless of the presence of an obstruction. Similarly, if the ground line is damaged creating an open-circuit on that line, a high-level signal will always be present on the ground line regardless of the presence of an obstruction.

Also, if the obstruction detector itself malfunctions, a continuous high-level or low-level signal may be present on the signal line regardless of the presence of an obstruction. While a false indication of an obstruction would merely result in the operator refusing to close the door, a false indication of the absence of an obstruction could result in the operator allowing the door to erroneously close.

### SUMMARY OF THE INVENTION

The present invention overcomes the potential problems inherent in the prior art. It provides a door operator system that causes the door operator to place the door in a safe position when an obstruction is detected and also when there is an error or fault in the obstruction detector or the wiring connecting the obstruction detector to the door operator.

The present invention provides a door operator system having a control circuit for controlling the opening and closing of the door across a threshold, a coded wave transmitter, for providing a coded wave and a wave receiver for providing a coded control signal in response to receipt of the coded wave. The presence of an obstruction in the door threshold prevents the receipt of the wave. A control signal detector provides an "unsafe" signal to the control circuit if no coded signal is detected.

In normal operation, receipt of the coded wave results in a coded control signal in response to which the control signal detector provides a "safe" signal to the control circuit. If an uncoded control signal is detected, either an obstruction exists, or an error or malfunction has occurred in the transmitter, the receiver, or the wiring connecting them to the control signal detector. As a result, the control signal detector provides an "unsafe" signal to the control circuit.

The present invention may be practiced with various obstruction detectors. Besides optical waves, radio waves and sound waves may be used. In addition, a mechanical obstruction detector such as an edge detector with series-wired normally-closed switches could be used.

### BRIEF DESCRIPTION OF THE DRAWINGS

FIG. 1 is a partially perspective and partially schematic view of a door operator system according to the invention.

FIG. 2 is block diagram of the coded light transmitter of FIG. 1.

FIG. 3 is a block diagram of the light receiver of FIG. 1.

FIG. 4 is a schematic diagram of the control signal detector of FIG. 1.

FIG. 5a is an exemplary graph showing the interrelationship between the signals at indicated points in FIG. 4 when coded light is being received.

FIG. 5b is an exemplary graph showing the interrelationship between the signals at indicated points in FIG. 4 when coded light is not being received or various error conditions exist.

FIG. 5c is an exemplary graph showing the interrelationship between the signals at indicated points in FIG. 4 when various other error conditions exist.

### DESCRIPTION OF THE PREFERRED EMBODIMENTS

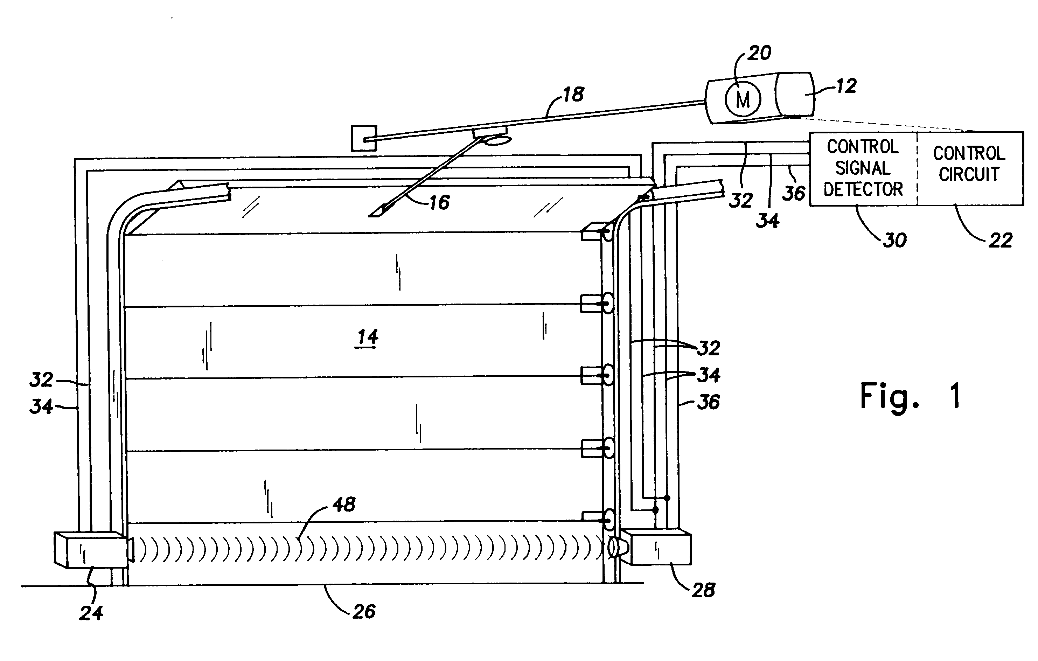

Referring to FIG. 1, a door operator 12 is connected to a door 14 by an arm 16. The aim 16 is driven along a track 18 by an electric motor 20, resulting in the door 14 either opening or closing, depending the direction of travel of the arm 16.

A control circuit 22 determines the direction of travel, if any, of the arm 16.

A coded light transmitter 24 is located at one side of the door 14, near the threshold 26. A light receiver 28 is located at the opposite side of the door 14, near the threshold 26.

The transmitter 24 and the receiver 28 are connected to a control signal detector 30 by a supply wire 32, and a ground wire 34. In addition, the receiver 28 is connected to the control signal detector 30 by a control signal wire 36.

The control circuit 22 and the control circuit detector 30 are both located remotely from the threshold 26. The control signal detector 30 may be advantageously housed commonly with the control circuit 22 or located close by.

In the preferred embodiment, the transmitter 24, the receiver 28 and the control signal detector 30, all receive power from the control circuit 22 which may supply, for example, 24 volts d.c. The transmitter 24 and the receiver 28 are supplied with power by the wires 32, 34.

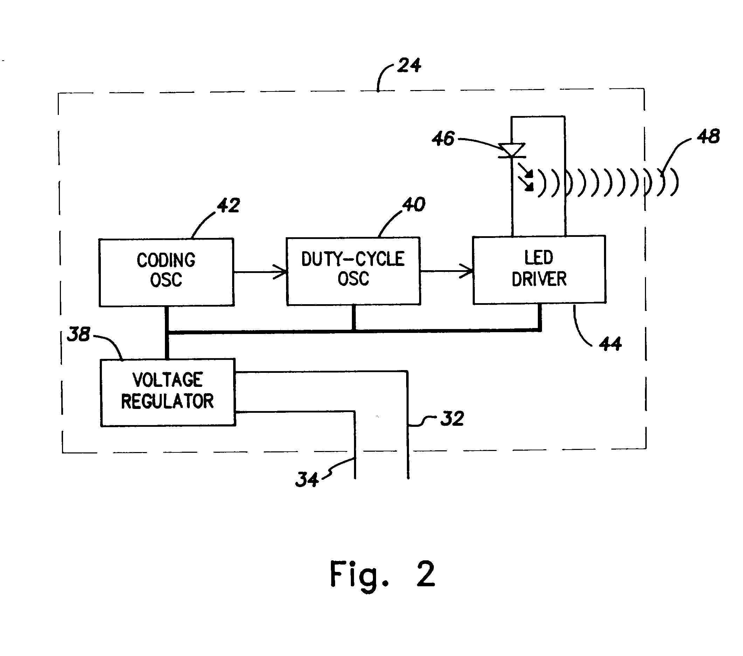

Referring to FIG. 2, the transmitter 24 includes a voltage regulator 38 connected to the supply wire 32 and the ground wire 34. The regulator 38 provides regulated power (e.g. 12 volts d.c.) to power a duty-cycle oscillator 40, a coding oscillator 42 and an LED driver 44.

The coding oscillator 42 provides a gating signal to the duty-cycle oscillator 40. The duty-cycle oscillator 40 provides a high frequency (e.g., 10 KHz) pulse train gated by the grating signal to the LED driver 44. The LED driver 44 in turn drives an infrared LED 46 to supply the coded light beam 88 (see FIG. 1).

The duty cycle of the pulses from the duty-cycle oscillator 40 is chosen to allow maintenance of sufficient intensity of the coded light beam 48 to overcome ambient light while keeping the LED driver 44 power dissipation below safe levels. For example, a duty cycle of 25% may be used. The high frequency of the pulses facilitates the reception of the coded light beam 48.

The frequency and duty cycle of the coding oscillator 42 is chosen to provide a suitable code for the coded light beam 48. For example, a frequency of 50 Hz and a 50% duty cycle may be used. This results in the coded light beam 48 being made up of 10 millisecond packets of 10 kHz light pulses followed by 10 milliseconds of no pulses, repeating 50 times per second.

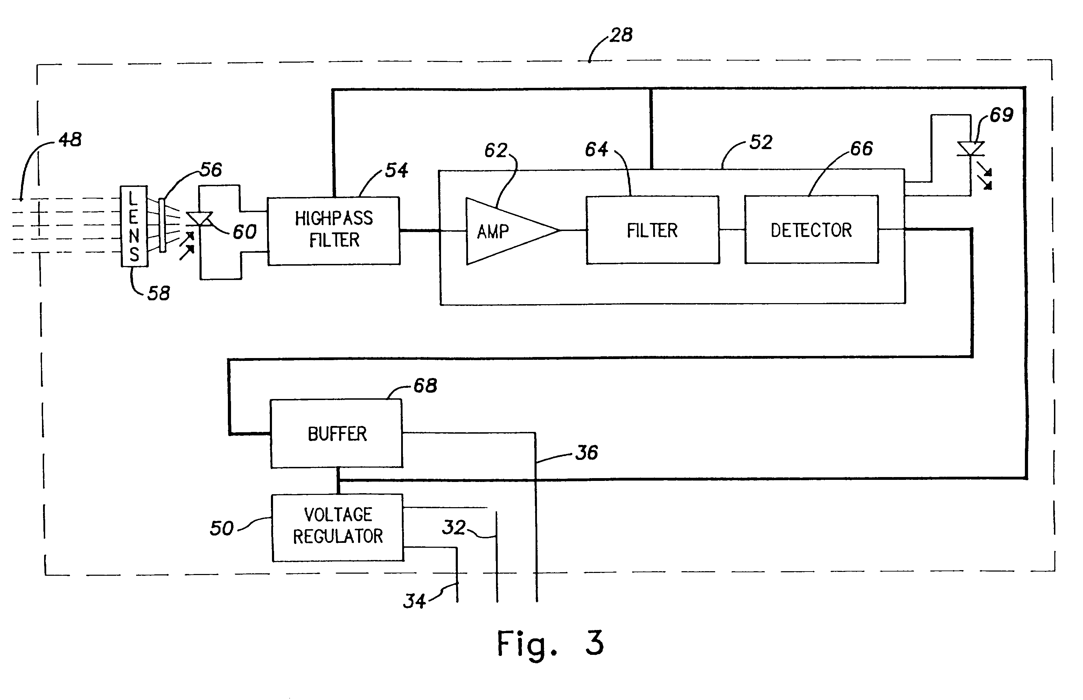

Referring to FIG. 3, the receiver 28 includes a voltage regulator 50 connected to the supply wire 32 and the ground wire 34. The regulator 50 provides regulated power (e.g. 12 volts d.c.) to power a buffer 68, an integrated-circuit detector 52 and a high pass filter 54.

The coded light beam 48 is focused by a lens 58 on an infrared photodiode 60. The coded light beam passes through an infrared filter 56 that blocks the majority of ambient light (non-infrared), before contacting photodiode 60.

The high pass filter 54 is chosen so that the desired signal (e.g. 10 khz) will be passed, while most ambient light produced voltage (which has very little high frequency content) is blocked.

The signal from the high pass filter 54 passes to the integrated-circuit detector 52. The integrated-circuit detector 52 contains an amplifier 62, a filter 64 and a detector 66 optimized to detect the envelope of a high frequency pulse train (e.g. a 10 kHz pulse train) and provide the envelope as an output, which in the present example would be a 50 Hz square wave.

The output of the integrated-circuit detector 52 passes to the input of a buffer 68 where it is buffered and provided as a control signal on the control signal wire 36.

The output of the integrated-circuit detector 52 provides a visual indication that it is receiving the coded light beam 48 by energizing a visible light LED 69.

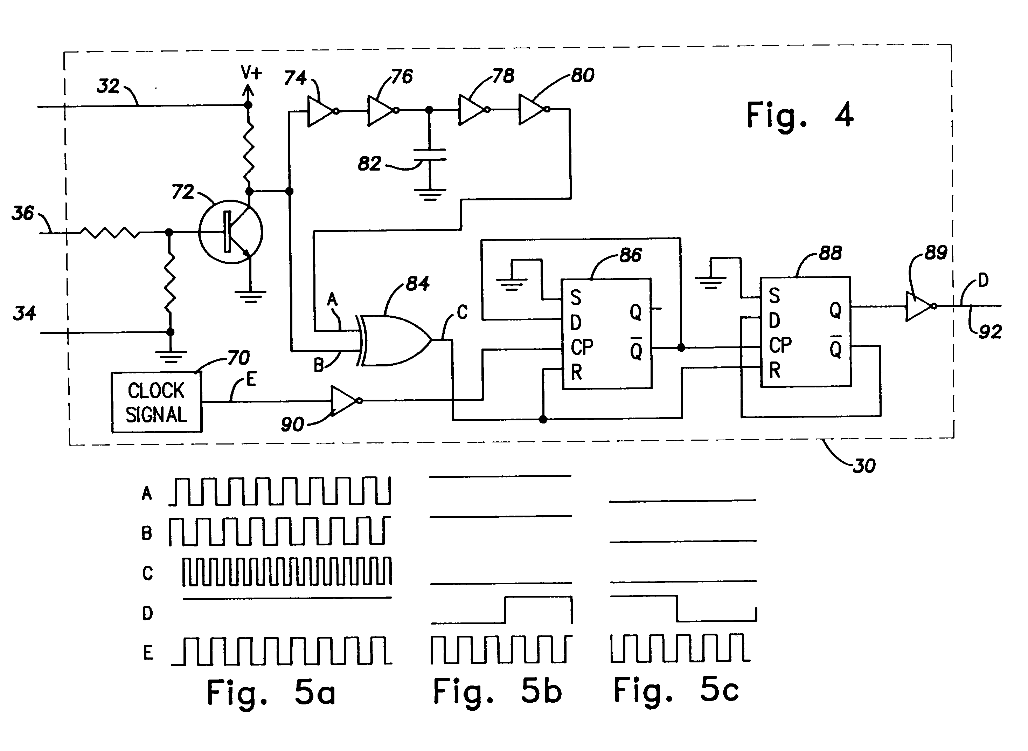

Referring to FIG.4, the control signal detector 30 is provided with a voltage V⁺ which may be advantageously obtained from the control circuit 22 (see FIG. 1). A clock signal 70 (e.g. 60 Hz) may be obtained also from the control circuit 22 or generated locally.

The control signal from the control signal wire 36 is buffered by the npn-transistor 72. The buffered control signal is applied to a delay circuit composed in this example of a series of inverters 74, 76, 78, 80 and a capacitor 82 connected between the inverters 76, 78 to ground, producing a delayed version of the control signal at the output of the inverter 80. The buffered control signal and the delayed control signal are applied to respective inputs of an "exclusive or" gate 84.

The output of the "exclusive or" gate 84 is applied to the reset inputs "R" of a pair of flip-flops 86, 88.

The clock signal 70 is inverted by an inverter 90 and applied to the clock pulse input "CP" of the flip-flop 86.

The inverted output "Q" of the flip-flop 86 is applied to the "D" input of the flip-flop 86 and to the clock pulse input "CP" of the flip-flop 88.

The inverted output "Q" of the flip-flop 88 is applied to the "D" input of the flip-flop 88.

The set terminals "S" of both flip-flops 86, 88 are connected to ground.

The output "Q" of the flip-flop 88 is inverted by an inverter 89 to provide a "safe"/"unsafe" signal 92 to the control circuit 22.

The flip-flops 86, 88 are thus configured so that a high value from the gate 84 will reset them, resulting in a high output for the "safe"/"unsafe" signal 92. On the other hand, a low value from the gate 84 will result in clock pulses from the clock signal 70 rippling down through the flip-flops 86, 88, thus providing a pulse train output for the "safe"/"unsafe" signal 92.

In normal operation, the transmitter 24 transmits the coded light beam 48 composed of packets of light pulses towards the receiver 28.

If no obstruction prevents the coded light beam 48 from reaching the receiver 28, the receiver 28 detects the envelope of the coded light beam 48 and provides the resulting coded control signal in the form of a square wave to the control signal detector 30 via the control signal wire 36.

The control signal and a delayed version of the control signal are applied to the "exclusive or" gate 84. The output of the gate 84 for these square wave inputs is a pulsed wave, the pulse duration being equal to the delay between the control signal and the delayed version of the control signal. This is shown in FIG. 5a for signal C, the output of the gate 84, (signal B being the control signal and signal A being the delayed control signal). The output of the gate 84 continuously resets the flip-flops 86, 88 before the clock signal 70 (signal E) can ripple through the flip-flops 86, 88. As a result, the "safe"/"unsafe" signal 92 stays high (signal D), thus providing the control circuit 22 a "safe" signal.

In response to "safe" signals, the control circuit 22 operates to raise and lower the door upon command.

If an obstruction prevents the coded light beam 48 from reaching the receiver 28, a control signal without coding is provided by the receiver 28 to the control signal detector 30.

Without the coding, the control signal is essentially constant with respect to the clock signal 70. As shown in FIG. 5b, the control signal B and the delayed control signal A are the same, thus the output of the gate 84 is a constant low value (signal C). This constant output of the gate 84 does not reset the flip-flops 86, 88. As a result, the clock signal 70 (signal E) ripples through the flip-flops 86, 88 providing a pulse train output (signal D) for the "safe"/"unsafe" signal 92, thus providing the control circuit 22 with an "unsafe" signal.

In response to "unsafe" signals, the control circuit 22 reverses the door 14 if it is closing, continues opening the door 14 if it is opening, and prevents the door 14 from closing if it is up.

In addition, in the present invention, if the signal wire 36 becomes disconnected or shorted to ground, the signals will also appear as in FIG. 5b.

Similarly, if the signal wire 36 is shorted to the supply voltage (through a short to the supply wire 32 or some other malfunction), the signals will appear as in FIG. 5c, where the output of the gate 84 (signal C) is still low and thus the control circuit 22 will receive an "unsafe" signal.

Also, since the receiver 28 has no internal source for the coded control signal (all coding being provided by the transmitter 24), if the receiver 28 fails, its output can not be the coded control signal and hence either the case of FIG. 5b or FIG. 5c will result and an "unsafe" signal will be sent to the control circuit.

Of course, if the transmitter 24 malfunctions, the effect will be the same as if an obstruction blocked the light beam 48.

It should be noted that while an optical obstruction detector is described, it would also be possible to practice the invention with other wave based obstruction detectors, such as radio-wave or sound-wave obstruction detectors wherein the wave is coded to distinguish it from error conditions. Also, other means of coding or modulating the control signal could be employed, as long as detected signals could be distinguished from the signals produced in response to obstructions, wiring errors or malfunctions.

While not the preferred embodiment, it would also be possible to utilize a coded signal with other obstruction detectors. For example, an edge detector with normally-closed switches in series could replace the wave path between the coded signal source and the receiver. This would effectively substitute the direct blocking of a wave by an obstruction for the indirect interruption of the coded signal by the physical operation of the switches. Because the transmitted signal would not be electrically isolated from the receiver, failure or fault detection would suffer, but most conditions would still be detected. In particular, shorts, opens or errors in the wiring between the coded signal source, the receiver and the control signal detector would be detected.

It should be evident that this disclosure is by way of example and that various changes may be made by adding, modifying or eliminating details without departing from the fair scope of the teaching contained in this disclosure. The invention is therefore not limited to particular details of this disclosure except to the extent that the following claims are necessarily so limited.

## Claims

1. A door operator system comprising:
control means (22) for controlling the opening and closing of a door across a door threshold;
a coded wave transmitter (24) for providing a coded wave;
a wave receiver (28) for providing a coded control signal in response to receipt of said coded wave, the presence of an obstruction in said door threshold preventing said receipt;
control signal detection means (30) for detecting said coded control signal and providing an "unsafe" signal to said control means if no coded control signal is detected ; and
wiring (36) between said receiver and said control means said coded control signal being chosen to differ from a short circuit and an open circuit signal produced by an error or fault in said transmitter, receiver or wiring.

2. A door operator system according to claim 1, wherein said wave is an optical wave.

3. A door operator system according to claim 1, wherein said wave is an infrared wave.

4. A door operator system according to claim 1, wherein said coded wave comprises packets of wave pulses.

5. A door operator system according to claim 1, wherein said control signal detection means comprises means to delay said coded control signal to provide a delayed signal and means to "exclusive or" said coded control signal and said delayed signal to provide said "unsafe" signal.

6. A door operator system for opening and closing a door across a door threshold, said system comprising:
a transmitter (24) for generating an encoded signal and transmitting said signal across a door threshold;
a receiver (28) adapted to detect said encoded signal transmitted by said transmitter and to provide a representative signal representative of detection of said encoded signal transmitted by said transmitter;
control means (22), connected to said receiver by wiring, for controlling opening and closing of a door in a manner to at least prevent closure of the door in the absence of said representative signal from said receiver, said control means including
a signal detector (30) for detecting the presence or absence of said representative signal from said receiver over said wiring and providing a signal indicative of safe conditions at said threshold when said signal detector detects the presence of said representative signal, and a signal indicative of unsafe conditions at said threshold when said signal detector detects the absence of a representative signal from said receiver over said wiring, and wherein
said control means for at least preventing closure of the door responds to said signal indicative of unsafe conditions from said signal detector, said representative signal providable by said receiver being different from signals producible by faulty operation of said transmitter, said receiver, and said wiring between said receiver and said control means.

7. A door operator system as claimed in claim 6, wherein
said transmitter includes an oscillator (40) for generating a first repetitive signal at a first predetermined frequency, means (42) for generating a second repetitive signal at a second predetermined frequency, whereby said second repetitive signal is gating said oscillator to provide said encoded signal of said transmitter, and means (46) for optically transmitting said encoded signal, and
said receiver includes optical receiving means (58,56), a detector (66) connected to said optical receiving means for detecting said second repetitive signal in said encoded signal from said transmitter and applying means (68) for applying said second repetitive signal to said control means, over said wiring, as said representative signal of said receiver.

8. A door operator system as claimed in claim 7, wherein said means for generating said second repetitive signal includes a coding oscillator (42) connected to said oscillator for generating said first repetitive signal.

9. A door operator system according to claim 6, wherein said encoded signal comprises packets of light pulses.

10. A door operator system according to claim 6, further comprising a control housing containing both said signal detector and said control means.

11. A door operator system according to claim 6, wherein said signal detector (30) comprises means (74,76,78,80,82) to delay said representative signal to provide a delayed signal and means (84) to "exclusive or" said representative signal and said delayed signal to provide said unsafe signal.

12. An optical obstruction detection system for a door operator system which includes a door control circuit (30,22) which connects to said obstruction detection system by wiring (36), and which regulates opening and closing of a controlled door so as to at least prevent closure of the door by determining whether a signal received from said obstruction detection system, over said wiring, has a predetermined frequency to represent that there is no obstruction present within a protected threshold of the door, said optical obstruction detection system comprising:
a transmitter (24) for transmitting an encoded optical signal across a door threshold, said transmitter including an oscillator (40) for generating a first repetitive signal at a first predetermined frequency, means (42) for generating a second repetitive signal of said predetermined frequency whereby said second repetitive signal is gating said oscillator for generating said first repetive signal to provide said encoded signal of said transmitter, and
a receiver (28) adapted to receive said encoded optical signal from said transmitter, said receiver including a detector (58,56,60) for detecting said second repetitive signal of said transmitter, and applying means (68) for applying said second repetitive signal, via said wiring, to said door control circuit (30, 22) of a door operator (12) when said detector detects said second repetitive signal.

## Patentansprüche

1. Türbetätigungssystem mit:
einer Steuereinrichtung (22) zum Steuern des Öffnens und Schließens einer Tür über eine Türschwelle hinweg;
einem Wellensender (24) zum Abgeben einer codierten Welle;
einem Wellenempfänger (28) zum Abgeben eines codierten Steuersignals bei Empfang der codierten Welle, wobei die Anwesenheit eines Hindernisses im Bereich der Türschwelle den Empfang verhindert;
einer Steuersignalerfassungseinrichtung (30) zum Erfassen des codierten Steuersignals und zum Abgeben eines "Unsicher"-Signals an die Steuereinrichtung, wenn kein codiertes Steuersignal erfaßt wird; und
einer Verdrahtung (36) zwischen dem Empfänger und der Steuereinrichtung;
wobei das codierte Steuersignal so gewählt ist, daß es sich von einem Kurzschlußsignal und einem Leerlaufsignal unterscheidet, welches durch eine Fehlschaltung oder einen Defekt in dem Sender, dem Empfänger oder der Verdrahtung entsteht.

2. Türbetätigungssystem nach Anspruch 1, wobei die Welle eine Lichtwelle ist.

3. Türbetätigungssystem nach Anspruch 1, wobei die Welle eine Infrarotwelle ist.

4. Türbetätigungssystem nach Anspruch 1, wobei die codierte Welle Pakete von Wellenimpulsen enthält.

5. Türbetätigungssystem nach Anspruch 1, wobei die Steuersignalerfassungseinrichtung eine Einrichtung zum Verzögern des codierten Steuersignals aufweist, um ein verzögertes Signal zu liefern, und ferner eine Einrichtung aufweist, mittels deren das codierte Signal und das verzögerte Signal einer Exklusiv-Oder-Verknüpfung unterworfen werden, um das "Unsicher"-Signal abzugeben.

6. Türbetätigungssystem zum Öffnen und Schließen einer Tür über eine Türschwelle hinweg, mit:
einem Sender (24), der ausgebildet ist, ein codiertes Signal zu erzeugen und es über eine Türschwelle hinweg zu senden;
einem Empfänger (28), der ausgebildet ist, das vom Sender gesendete codierte Signal zu erfassen und ein Anzeigesignal abzugeben, welches die Erfassung des vom Sender gesendeten Signals anzeigt;
einer Steuereinrichtung (22), die durch eine Verdrahtung mit dem Empfänger verbunden ist, um das Öffnen und Schließen einer Tür zu steuern, dergestalt daß wenigstens das Schließen der Tür verhindert wird, solange kein Anzeigesignal vom Empfänger vorliegt,
wobei die Steuereinrichtung eine Signalerfassungseinrichtung (30) aufweist zum Erfassen des Vorliegens oder Fehlens des vom Empfänger über die Verdrahtung ankommenden Anzeigesignals und zum Abgeben eines Signals, das sichere Verhältnisse an der Schwelle meldet, wenn die Signalerfassungseinrichtung das Vorliegen des Anzeigesignals erfaßt, und zum Abgeben eines Signals, das unsichere Verhältnisse an der Schwelle meldet, wenn die Signalerfassungseinrichtung das Fehlen eines vom Empfänger über die Verdrahtung ankommenden Anzeigesignals erfaßt, und
wobei eine wenigstens das Schließen der Tür verhindernde Einrichtung auf das unsichere Verhältnisse meldende Signal von der Signalerfassungseinrichtung reagiert und das vom Empfänger abgebbare Anzeigesignal sich von Signalen unterscheidet, die durch fehlerhaften Betrieb des Senders, des Empfängers und der zwischen dem Empfänger und der Steuereinrichtung befindlichen Verdrahtung entstehen können.

7. Türbetätigungssystem nach Anspruch 6,
wobei der Sender folgende Merkmale aufweist:
einen Oszillator (40) zum Erzeugen eines ersten Wiederholsignals mit einer ersten vorgegebenen Frequenz,
eine Einrichtung (42) zum Erzeugen eines zweiten Wiederholsignals mit einer zweiten vorgegebenen Frequenz, das den Oszillator ansteuert, um das codierte Signal des Senders zu liefern, und
eine Einrichtung (46) zum optischen Senden des codierten Signals; und
wobei der Empfänger folgende Merkmale aufweist:
optische Empfangsglieder (58, 56),
eine mit den optischen Empfangsgliedern verbundene Erfassungseinrichtung (66) zum Erfassen des zweiten Wiederholsignals in dem vom Sender ankommenden codierten Signal, und
eine Anlegeeinrichtung (68) zum Anlegen des zweiten Wiederholsignals über die Verdrahtung an die Steuereinrichtung als Anzeigesignal des Empfängers.

8. Türbetätigungssystem nach Anspruch 7, wobei die Einrichtung zum Erzeugen des zweiten Wiederholsignals einen Codieroszillator (42) aufweist, der mit dem Oszillator zum Erzeugen des ersten Wiederholsignals verbunden ist.

9. Türbetätigungssystem nach Anspruch 6, wobei das codierte Signal Pakete von Lichtimpulsen enthält.

10. Türbetätigungssystem nach Anspruch 6, ferner mit einem Steuerungsgehäuse, das sowohl die Signalerfassungseinrichtung als auch die Steuereinrichtung enthält.

11. Türbetätigungssystem nach Anspruch 6, wobei die Signalerfassungseinrichtung (30) eine Einrichtung (74, 76, 78, 80, 82) zum Verzögern des Anzeigesignals aufweist, um ein verzögertes Signal zu liefern, und ferner eine Einrichtung (84) aufweist, die ausgebildet ist, das Anzeigesignal und das verzögerte Signal einer Exklusiv-Oder-Verknüpfung zu unterwerfen, um das "Unsicher"-Signal abzugeben.

12. System zum optischen Erfassen eines Hindernisses, für ein Türbetätigungssystem, das einen Türsteuerschaltkreis (30, 22) enthält, der mit dem Hinderniserfassungssystem über eine Verdrahtung (36) verbunden ist und der das Öffnen und Schließen einer gesteuerten Tür steuert, dergestalt daß wenigstens das Schließen der Tür verhindert wird, indem festgestellt wird, ob ein von dem Hinderniserfassungssystem über die Verdrahtung empfangenes Signal eine vorgegebene Frequenz hat, die anzeigt, daß in einem geschützten Schwellenbereich der Tür kein Hindernis vorhanden ist, wobei das System zum optischen Erfassen eines Hindernisses folgende Merkmale aufweist:
einen Sender (24) zum Senden eines codierten optischen Signals über eine Türschwelle, wobei der Sender einen Oszillator (40) zum Erzeugen eines ersten Wiederholsignals mit einer ersten vorgegebenen Frequenz sowie eine Einrichtung (42) zum Erzeugen eines zweiten Wiederholsignals der vorgegebenen Frequenz aufweist, das den Oszillator zum Erzeugen des ersten Wiederholsignals ansteuert, um das codierte Signal des Senders zu liefern, und
einen Empfänger (28), der ausgebildet ist, das codierte optische Signal vom Sender zu empfangen, wobei der Empfänger eine Erfassungseinrichtung (58, 56, 60) zum Erfassen des zweiten Wiederholsignals des Senders und eine Anlegeeinrichtung (68) aufweist, die ausgebildet ist, das zweite Wiederholsignal über die Verdrahtung an den Türsteuerschaltkreis (30, 22) einer Türbetätigungseinrichtung (12) anzulegen, wenn die Erfassungseinrichtung das zweite Wiederholsignal erfaßt.

## Revendications

1. Système formant dispositif de manoeuvre de porte, comprenant :
des moyens de commande (22) pour commander l'ouverture et la fermeture d'une porte en travers d'un seuil de porte ;
un émetteur d'onde codée (24) pour donner une onde codée ;
un récepteur d'onde (28) pour donner un signal de commande codé en réponse à la réception de ladite onde codée, la présence d'un obstacle dans ledit seuil de porte empêchant ladite réception ;
des moyens de détection de signal de commande (30) pour détecter ledit signal de commande codé et donnant un signal de "danger" auxdits moyens de commande si aucun signal de commande codé n'est détecté ; et
un câblage (36) entre ledit récepteur et lesdits moyens de commande, ledit signal de commande codé étant choisi pour être différent d'un court-circuit et d'un signal de circuit ouvert produit par une erreur ou un défaut dans ledit émetteur, ledit récepteur ou le câblage.

2. Système fcrmant dispositif de manoeuvre de porte selon la revendication 1, dans lequel ladite onde est une onde optique.

3. Système formant dispositif de manoeuvre de porte selon la revendication 1, dans lequel ladite onde est une onde infrarouge.

4. Système formant dispositif de manoeuvre de porte selon la revendication 1, dans lequel ladite onde codée comprend des paquets d'impulsions d'onde.

5. Système formant dispositif de manoeuvre de porte selon la revendication 1, dans lequel lesdits moyens de détection de signal de commande comprennent des moyens pour retarder ledit signal de commande codé pour donner un signal retardé et des moyens pour faire subir une opération logique "ou exclusif" audit signal de commande codé et audit signal retardé pour donner ledit signal de "danger".

6. Système formant dispositif de manoeuvre de porte pour ouvrir et pour fermer une porte en travers d'un seuil de porte, ledit système comprenant :
un émetteur (24) pour produire un signal codé et pour émettre ledit signal en travers d'un seuil de porte ;
un récepteur (28) conçu pour détecter ledit signal codé émis par ledit émetteur et pour donner un signal représentatif de la détection dudit signal de codage émis par ledit émetteur ;
des moyens de commande (22) reliés audit récepteur par câblage, pour commander l'ouverture et la fermeture d'une porte de façon à au moins empêcher la fermeture de la porte en l'absence dudit signal représentatif en provenance dudit récepteur, lesdits moyens de commande incluant
un détecteur de signal (30) pour détecter la présence ou l'absence dudit signal représentatif en provenance dudit récepteur sur ledit câblage et pour donner un signal indicatif des conditions de sécurité au niveau dudit seuil quand ledit détecteur de signal détecte la présence dudit signal représentatif, et un signal indicatif de conditions de danger au niveau dudit seuil quand ledit détecteur de signal détecte l'absence d'un signal représentatif en provenance dudit récepteur sur ledit câblage, et dans lequel
lesdits moyens de commande, pour au moins empêcher la fermeture de la porte, répondent audit signal indicatif de conditions de danger en provenance dudit détecteur de signal, ledit signal représentatif pouvant être procuré par ledit récepteur étant différent des signaux pouvant être produits par un fonctionnement défectueux dudit émetteur, dudit récepteur, et dudit câblage entre ledit récepteur et lesdits moyens de commande.

7. Système formant dispositif de manoeuvre de porte selon la revendication 6, dans lequel
ledit émetteur comprend un oscillateur (40) pour produire un premier signal répétitif à une première fréquence prédéterminée, des moyens (42) pour produire un second signal répétitif à une seconde fréquence prédéterminée, de sorte que ledit second signal répétitif attaque ledit oscillateur pour donner ledit signal codé dudit émetteur, et des moyens (46) pour émettre, de façon optique, ledit signal codé, et
ledit récepteur comprend des moyens optiques de réception (58, 56), un détecteur (66) relié auxdits moyens optiques de réception pour détecter ledit second signal répétitif dans ledit signal codé en provenance dudit émetteur et des moyens d'application (68) pour appliquer ledit second signal répétitif auxdits moyens de commande, sur ledit câblage, en tant que dit signal représentatif dudit récepteur.

8. Système formant dispositif de manoeuvre de porte selon la revendication 7, dans lequel lesdits moyens de production dudit second signal répétitif comprend un oscillateur de codage (42) relié audit oscillateur de production dudit premier signal répétitif.

9. Système formant dispositif de manoeuvre de porte selon la revendication 6, dans lequel ledit signal codé comprend des paquets d'impulsions de lumière.

10. Système formant dispositif de manoeuvre de porte selon la revendication 6, comprenant, de plus, un boîtier de commande contenant à la fois ledit détecteur de signal et lesdits moyens de commande.

11. Système formant dispositif de manoeuvre de porte selon la revendication 6, dans lequel ledit détecteur de signal (30) comprend des moyens (74, 76, 78, 80, 82) pour retarder ledit signal représentatif, pour donner un signal retardé et des moyens (84) pour faire subir une opération logique "ou exclusif" audit signal représentatif et audit signal retardé pour donner ledit signal de danger.

12. Système optique de détection d'obstacle pour un système formant dispositif de manoeuvre de porte qui comprend un circuit de commande de porte (30, 22) qui se connecte audit système de détection d'obstacle par un câblage (36), et qui régule l'ouverture et la fermeture d'une porte commandée de façon à au moins empêcher la fermeture de la porte en déterminant si un signal reçu en provenance dudit système de détection d'obstacle, sur ledit câblage, a une fréquence prédéterminée pour représenter qu'il n'y a pas d'obstacle présent à l'intérieur d'un seuil protégé de la porte, ledit système optique de détection d'obstacle, comprenant :
un émetteur (24) pour émettre un signal optique codé en travers d'un seuil de porte, ledit émetteur incluant un oscillateur (40) pour produire un premier signal répétitif à une première fréquence prédéterminée, des moyens (42) pour produire un second signal répétitif de ladite fréquence prédéterminée de sorte que ledit second signal répétitif attaque ledit oscillateur pour produire ledit premier signal répétitif pour donner ledit signal codé dudit émetteur, et
un récepteur (28) conçu pour recevoir ledit signal optique codé en provenance dudit émetteur, ledit récepteur incluant un détecteur (58, 56, 60) pour détecter ledit second signal répétitif dudit émetteur, et des moyens d'application (68) pour appliquer ledit second signal répétitif, par l'intermédiaire dudit câblage, audit circuit de commande (30, 22) d'un dispositif de manoeuvre de porte (12) quand ledit détecteur détecte ledit second signal répétitif.
